(19) Europäisches Patentamt / European Patent Office / Office européen des brevets

(11) **EP 1 221 608 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
***G01N 22/04*** *(2006.01)*

(21) Anmeldenummer: **01129895.7**

(22) Anmeldetag: **15.12.2001**

(54) **Verfahren zum Prüfen eines Produktionsmaterials in einem Mikrowellenfeld**

Method for testing a production material in a microwave field

Méthode pour tester un matériau de production dans un champ de micro-ondes

(84) Benannte Vertragsstaaten:
**AT BE CH CY DE DK ES FI FR GB GR IE IT LI LU MC NL PT SE TR**

(30) Priorität: **09.01.2001 DE 10100664**

(43) Veröffentlichungstag der Anmeldung:
**10.07.2002 Patentblatt 2002/28**

(73) Patentinhaber: **Hauni Maschinenbau AG
21033 Hamburg (DE)**

(72) Erfinder:
- **Möller, Henning, Dr.
22605 Hamburg (DE)**
- **Tobias, Jörg
21423 Drage (DE)**

(56) Entgegenhaltungen:
EP-A- 0 337 623    EP-A- 0 791 823
WO-A-00/09983    WO-A-01/20311
US-A- 4 514 680    US-A- 5 736 864
US-A- 6 163 158

- **PATENT ABSTRACTS OF JAPAN vol. 012, no. 255 (P-732), 19. Juli 1988 (1988-07-19) & JP 63 045547 A (NIPPON KOSHUHA KK), 26. Februar 1988 (1988-02-26)**

**Beschreibung**

Die Erfindung betrifft ein Verfahren zum Prüfen einer Materialmenge, welche hauptsächlich ein Produktionsmaterial enthält, auf das Vorhandensein eines Fremdmaterials in dieser Menge, bei welchem ein Mikrowellenfeld erzeugt wird, die Materialmenge in den Wirkbereich des Mikrowellenfeldes eingebracht wird und die Beeinflussung des Mikrowellenfeldes analysiert wird.

In der tabakverarbeitenden Industrie werden große Mengen von Tabak automatisch verarbeitet. Dabei wird der Tabak in der Regel nacheinander mehreren Verfahrensschritten unterzogen und dazu z. B. auf Förderbändern zwischen verschiedenen Anlagen transportiert. Gelegentlich wird beobachtet, dass in den Endprodukten der Tabakverarbeitung, z. B. Zigaretten, Körper aus Fremdmaterialien vorhanden sind, welche im ungünstigen Fall negative Auswirkungen auf Produkteigenschaften wie Aussehen, Geschmack und Abrauchwerte haben können. Daher ist die Tabak verarbeitende Industrie stets auf der Suche nach Methoden, um das Auftreten solcher Fremdkörper in ihren Produkten zu vermeiden. Im Stand der Technik werden hauptsächlich optische Verfahren angewendet, in denen der Tabak entlang einer Transportstrecke zunächst zu einer einlagigen Schicht ausgebreitet wird und dann mittels Kameras und Bildverarbeitungsanlagen Fremdkörper entdeckt und ausgesondert werden. Die entsprechenden Geräte sind aufwendig und können nur im Bereich der Tabakvorbereitung eingesetzt werden. Fremdkörper, welche direkt vor oder während der Zigarettenherstellung in den Tabak gelangen, können nicht erkannt werden. Während der Zigarettenherstellung werden Sichteinrichtungen zur Aussichtung zu schwerer Tabakteilchen (Rippen) eingesetzt, durch welche einige Fremdkörper ausgesondert werden können, sowie Metallsuchgeräte zur Identifikation von Metallteilen im bereits geschlossenen Zigarettenstrang. Der Grossteil aller denkbaren Fremdkörper kann jedoch hier nicht mehr erkannt werden.

Aus dem Stand der Technik sind mehrere Verfahren bekannt, um die Dichte und die Feuchte des in einem Zigarettenstrang enthaltenen Tabaks mittels Mikrowellen zu messen. Diese Verfahren sind zum Teil hoch genau und beruhen darauf, dass Tabak ein gutes Dielektrikum ist und als stark hygroskopische Substanz einen relativ hohen Wasseranteil von 10 bis 20 Gewichtsprozent aufweist. Das Wasser selbst ist ebenfalls ein sehr gutes Dielektrikum und weist zusätzlich durch die hohe Beweglichkeit der molekularen Dipole einen hohen Verlustfaktor bei Mikrowellenfrequenzen auf. Die genannten Eigenschaften führen dazu, dass ein Mikrowellenfeld durch die Anwesenheit von Tabak stark beeinflusst wird und dass sich die Einflüsse durch den trockenen Tabakanteil und den Wasseranteil gut unterscheiden lassen. In der US 4,707,652 ist ein Verfahren offenbart, in welchem die räumliche Streuung eines Mikrowellenfeldes an einer Tabakprobe auf Anomalitäten untersucht wird, um so Fremdkörper zu erkennen. Dieses Laborverfahren ist jedoch langsam und daher insbesondere für den Einsatz an schnell laufenden Zigarettenmaschinen nicht geeignet.

Aus der WO00/09983 ist ein Verfahren zur Erkennung von Fremdmaterialien in Tabak bekannt, bei welchem zunächst die Abschwächung und Phasenverschiebung von Mikrowellen beim Durchtritt durch den Tabak ermittelt werden, aus diesen Messwerten dann die Dichte und die Feuchte des Tabaks bestimmt werden und zuletzt durch ein trainiertes neuronales Netzwerk aus der Abfolge der Dichte- und oder Feuchtemesswerte das Vorhandensein von Fremdmaterialien erkannt wird.

US 6,163,158 offenbart ein weiteres Verfahren zur Erkennung von Fremdmaterialien in Tabak.

Die nicht vorveröffentlichte WO 01/20311 A1 beschreibt ein Verfahren zur Erkennung von Fremdkörpern in Materialien, z.B. Nahrungsmitteln, bei welchem das Messgut mit Mikrowellen mehrerer Frequenzen durchstrahlt wird, bei jeder Frequenz die Amplitude und die Phase der empfangenen Mikrowellen gemessen und mit zulässigen Grenzwerten verglichen werden.

Daher stellt sich die Aufgabe, ein Verfahren zu entwickeln, mit welchem im Bereich der Zigarettenherstellung in einer Menge eines Produktionsmaterials, insbesondere Tabak in einem geschlossenen Zigarettenstrang, Körper aus möglichst vielen unterschiedlichen Fremdmaterialien schnell nachgewiesen und somit ausgesondert werden können.

Erfindungsgemäß wird die Aufgabe durch ein Verfahren gelöst, bei welchem ein Mikrowellenfeld erzeugt wird, die Materialmenge in den Wirkbereich des Mikrowellenfeldes eingebracht wird und die Beeinflussung des Mikrowellenfeldes analysiert wird, und welches dadurch gekennzeichnet ist, dass die Istwerte einer ersten und einer zweiten charakteristischen Größe des Mikrowellenfeldes gleichzeitig gemessen werden, dass ein zulässiger Wertebereich für diese Istwerte vorgegeben wird, dass geprüft wird, ob die Istwerte in dem zulässigen Wertebereich liegen und dass ein Signal erzeugt wird, wenn die Istwerte nicht in dem zulässigen Wertebereich liegen.

Als Größen des Mikrowellenfeldes im Sinne der Erfindung werden hier sowohl reale Größen des erzeugten Mikrowellenfeldes, wie Amplitude und Phase bezeichnet, als auch Größen eines das Mikrowellenfeld führenden Bauteiles, wie z. B. die Resonanzfrequenz und die Bandbreite eines Resonators, in welchem sich das Mikrowellenfeld ausbreitet.

Der zulässige Wertebereich umfasst bei einem erfindungsgemäßen Verfahren vorzugsweise solche Werte der beiden Größen, welche bei Beeinflussung des Mikrowellenfeldes durch eine Materialmenge auftreten, die ausschließlich das Produktionsmaterial enthält.

Vorteilhafterweise zeigt das Signal das Vorhandensein eines Fremdmaterials in der Materialmenge an.

Die Materialmenge kann besonders einfach in Form eines Materialstroms durch den Wirkbereich des Mikrowellenfeldes geleitet werden. Dabei ist es günstig, wenn der Materialstrom durch ein Hüllmaterial umschlossen ist.

Das Verfahren eignet sich besonders zur Anwendung an Produktionsmaterialien der Tabakverarbeitenden Industrie wie Tabak oder Filtertow.

Vorzugsweise wird der Materialstrom vor oder nach dem Durchtritt durch den Wirkbereich des Mikrowellenfeldes in Abschnitte unterteilt und solche Abschnitte, bei deren Durchtritt das Signal erzeugt wird, werden nachfolgend aus dem Materialstrom ausgesondert.

In einer besonders vorteilhaften Weiterbildung des Verfahrens wird das Produktionsmaterial vor dem Durchtritt durch den Wirkbereich zunächst zu einem endlosen Strang geformt und anschließend mit einem Hüllmaterial umwickelt. Vor oder nach dem Durchtritt wird der Strang in ein eine Folge von länglichen Abschnitten unterteilt, welche zu Zigaretten weiterverarbeitet werden. Solche Abschnitte, bei deren Durchtritt das Signal erzeugt wird, werden vor der weiteren Verarbeitung aus der Folge von Abschnitten ausgesondert.

Der zulässige Wertebereich kann besonders vorteilhaft ermittelt werden, indem eine Referenzmenge des Produktionsmaterials, welche keine Fremdmaterialien enthält, durch den Wirkbereich des Mikrowellenfeldes geführt wird und die Istwerte, welche während des Durchtritts der Referenzmenge gemessen werden, den zulässigen Wertebereich bilden. Dabei kann die Referenzmenge vorteilhafterweise mit Hüllmaterial umhüllt sein.

Das erfindungsgemäße Verfahren lässt sich besonders einfach mit einem Verfahren kombinieren, in welchem parallel und unabhängig hierzu aus den Istwerten der selben charakteristischen Größen des Mikrowellenfeldes mindestens eine Eigenschaft des Produktionsmaterials bestimmt wird. Diese Eigenschaft kann insbesondere die Dichte und/ oder die Feuchte von als Produktionsmaterial verwendetem Tabak sein.

Das erfindungsgemäße Verfahren beruht darauf, dass die oben aufgeführten dielektrischen Eigenschaften des Tabaks sich von den Eigenschaften vieler anderer Materialien deutlich unterscheiden. Im Sinne der Aufgabe kommen im wesentlichen solche Materialien in Betracht, die großtechnisch eingesetzt werden, da gerade diese die Gelegenheit haben, während der Verarbeitung in den Tabak zu gelangen. Dies sind insbesondere Metalle und Kunststoffe.

Metalle haben einen grundsätzlich anderen Einfluss auf Mikrowellen als dielektrische Stoffe, da die hohe Leitfähigkeit der Metalle dazu führt, dass die elektrische Komponente von elektromagnetischen Feldern kurzgeschlossen wird. Dies führt zu starken Reflektionen und Streuungen der Mikrowellen.

Technisch eingesetzte Kunststoffe sind in der Regel darauf optimiert, kein Wasser aufzunehmen, weil dies zu einer nicht erwünschten Klimaabhängigkeit der mechanischen und elektrischen Eigenschaften der Stoffe führen würde. Daher weisen Kunststoffe deutlich unterschiedliche Dielektrizitätszahlen und Verlustfaktoren auf als Tabak, welcher einen großen Anteil an Wasser enthält.

Das erfindungsgemäße Verfahren ermöglicht eine Erkennung von Fremdmaterialien in einem Produktionsmaterial, die gleichzeitig sehr schnell und sehr zuverlässig ist und sich daher besonders für den Einsatz an schnell laufenden Produktionsmaschinen der tabakverarbeitenden Industrie, insbesondere an Zigarettenherstellungsmaschinen, eignet.

Im folgenden sind mehrere Anwendungsbeispiele des erfindungsgemäßen Verfahrens ggf. anhand von Zeichnungen näher erläutert:

Figur 1 zeigt schematisch eine Vorrichtung, wie sie prinzipiell aus der DE 197 05 260 A1 zur Bestimmung von Dichte und Feuchte von Tabak in einem Zigarettenstrang bekannt ist.

Figur 2 zeigt Resonanzkurven eines Resonators, wie er zur Messung von Tabakdichte und Tabakfeuchte z. B. an einem umhüllten Zigarettenstrang eingesetzt wird.

Figuren 3, 4 und 5 zeigen ein bevorzugtes Verfahren zur Vermessung von Resonanzkurven, wie sie in Fig. 2 dargestellt sind.

Figur 6 zeigt eine weitere Methode zur Bestimmung zweier charakteristischer Größen eines Mikrowellenfeldes, welches durch ein Messgut beeinflusst wird.

Figur 7 ist eine Darstellung einer theoretischen Ebene, welche durch die Werte zweier charakteristischen Größen des Mikrowellenfeldes aufgespannt wird, mit einer eingezeichneten Grenzlinie für die Erkennung von Fremdkörpern.

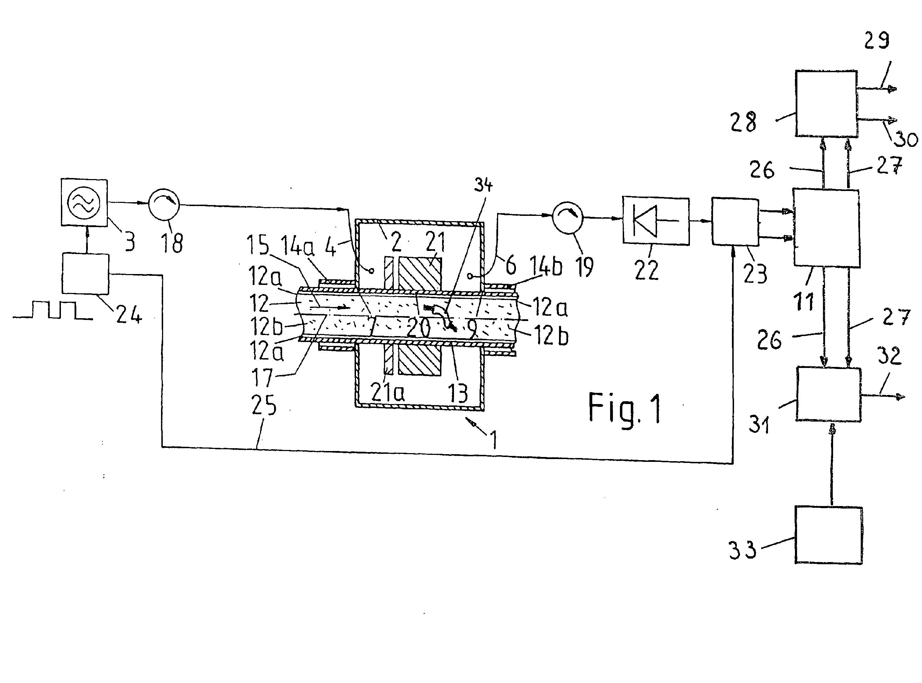

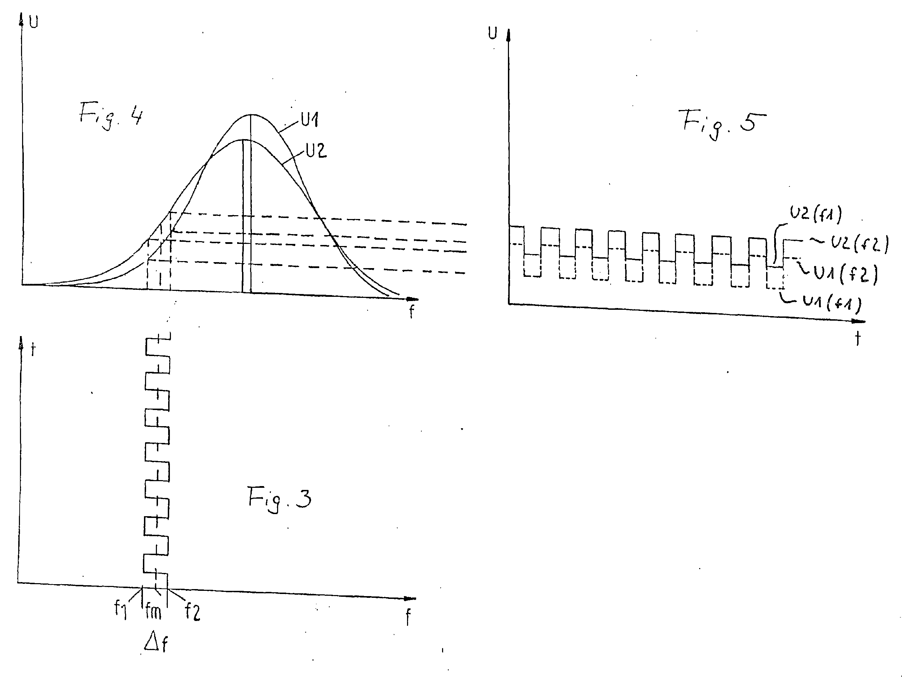

Die in Figur 1 dargestellte Vorrichtung besteht aus einem Mikrowellengenerator 3 mit einer Frequenzsteueranordnung 24, welche dafür sorgt, dass der Generator 3 Mikrowellen mit einer Frequenz erzeugt, welche zyklisch in schneller Abfolge zwischen zwei Werten f1 und f2 wechselt. Die Mikrowellen werden über ein Entkopplungsglied 18 einer Resonatoranordnung 1 zugeführt, in welche sie mittels einer Antenne 4 eingekoppelt werden. Das Entkopplungsglied 18 verhindert, dass der Generator 3 durch an der Resonatoranordnung 1 reflektierte Mikrowellen gestört wird. Aus der Resonatoranordnung 1 werden die Mikrowellen mittels einer weiteren Antenne 6 ausgekoppelt und über ein weiteres Entkopplungsglied 19 einer Gleichrichterdiode 22 zugeführt. Die Gleichrichterdiode 22 gibt ein Ausgangssignal ab, welches im wesentlichen der ihr zugeleiteten Mikrowellenleistung proportional ist. Dieses Ausgangssignal wird einer Demodulatoranordnung 23 zugeführt, gemeinsam mit Steuersignalen 25 von der Frequenzsteueranordnung 24. Die Demodulatoranordnung 24 trennt über die Steuersignale 25 das Ausgangssignal der Gleichrichterdiode 22, welches anliegt, wenn der Mikrowellengenerator 3 Mikrowellen der Frequenz f1 erzeugt, von dem Ausgangssignal der Gleichrichterdiode 22, welches anliegt, wenn der Mikrowellengenerator 3 Mikrowellen der Frequenz f2 erzeugt, und stellt beide Ausgangssignale getrennt einer Auswerteschaltung 11 zur Verfügung. In den Figuren 3 bis 5 ist das soeben beschriebene Verfahren detailliert dargestellt. In der Auswerteschaltung 11 werden als charakteristische Größen des sich in der Resonatoranordnung 1 ausbildenden Mikrowellenfeldes der Mittelwert und die Differenz der beiden Ausgangssignale bestimmt und der jeweilige Istwert 26 des Mittelwertes und der Istwert 27 der Differenz an eine erste Rechenstufe 28 und eine zweite Rechenstufe 31 übertragen. In der ersten Rechenstufe 28 wird aus den Istwerten 26,27 der beiden Größen die Tabakfeuchte 29 und die Tabakdichte 30 des im Zigarettenstrang 12 enthaltenen Tabaks 12b berechnet und an eine nicht dargestellte Steueranordnung gesendet, welche den Prozess der Herstellung des Zigarettenstranges 12 steuert. In der zweiten Rechenstufe 31 wird überprüft, ob die Istwerte 26,27 der beiden Größen in einem zulässigen Wertebereich liegen, welcher in einer Speicheranordnung 33 abgelegt ist. Liegen die Istwerte 26,27 nicht in diesem zulässigen Wertebereich, wird ein Signal 32 erzeugt, welches die Anwesenheit eines Fremdkörpers 34 innerhalb des Zigarettenstranges 12 anzeigt. Das Signal 32 wird an eine nicht dargestellte Auswurfeinheit übermittelt, welche nach der ebenfalls nicht dargestellten Aufteilung des Zigarettenstranges 12 in einzelne Abschnitte den Abschnitt, welcher den Fremdkörper 34 enthält, vor der weiteren Verarbeitung aussondert. Eine entsprechende Auswurfeinheit ist z. B. in der DE 198 06 125 A1 der Anmelderin beschrieben.

Der Nachweis von Fremdkörpern 34 erfolgt parallel zu der Bestimmung der Tabakdichte 30 und der Tabakfeuchte 29 und kann auch durchgeführt werden, ohne dass Tabakdichte 30 und Tabakfeuchte 29 bestimmt werden.

Die Resonatoranordnung 1 besteht aus einem metallischen Gehäuse 2 mit einer Einlassöffnung 7 und einer Auslassöffnung 9. In den genannten Öffnungen 7 und 9 befindet sich ein Führungsröhrchen 13, durch welches ein geschlossener Zigarettenstrang 12 geleitet wird, welcher aus einer Papierumhüllung 12a und einem Füller 12b ,z. B. Schnitttabak, besteht. Das Gehäuse erstreckt sich in Fortsätzen 14a und 14b in und gegen Strangrichtung 15, um das Austreten von Mikrowellen aus der Resonatoranordnung 1 zu verhindern. Um das Führungsröhrchen 13 befindet sich der eigentliche Resonator 21 mit einer Abstimmscheibe 21 a, beide z. B. bestehend aus einer Keramik oder einem Kunststoff mit hoher Dielektrizitätszahl, mit einer zentrischen Bohrung 20 zur Aufnahme des Führungsröhrchens 13. Anstelle eines dielektrischen Resonators 21 kann auch das Gehäuse 2 selbst als Hohlraumresonator fungieren, eine hierzu optimierte Ausgestaltung ist der DE 198 54 550 A1 der Anmelderin zu entnehmen, auf deren Offenbarung hier ausdrücklich verwiesen wird.

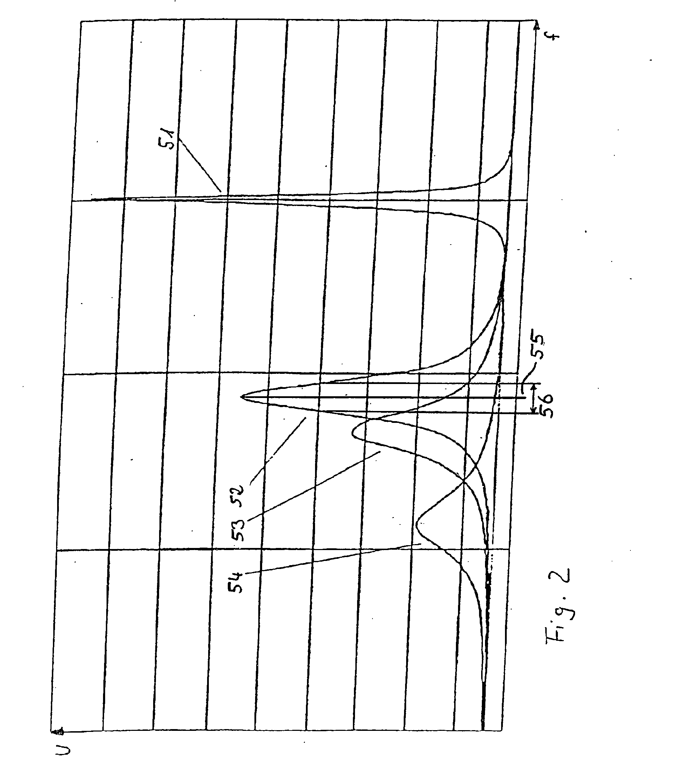

Bei Betrieb der beschriebenen Vorrichtung bildet sich in der Resonatoranordnung 1 aufgrund der Anregung über die Antenne 4 ein stehendes Mikrowellenfeld mit der Frequenz der Anregung aus. Bei Verwendung eines dielektrischen Resonators 21 konzentriert sich dieses Feld hauptsächlich in dessen Inneren. Bei Verwendung eines Hohlraumresonators, z. B. gemäß der genannten DE 198 54 550 A1, füllt das stehende Mikrowellenfeld den gesamten Resonatorinnenraum aus. In beiden Fällen erstreckt sich ein Teil des Mikrowellenfeldes durch das Führungsröhrchen 13 in den Zigarettenstrang 12. Das sich innerhalb der Resonatoranordnung 1 ausbildende stehende Mikrowellenfeld erregt eine Mikrowellenschwingung in der Antenne 6, welche über das Entkopplungsglied 19 zu der Gleichrichterdiode 22 geleitet wird. Die Amplitude des sich in der Resonatoranordnung 1 ausbildenden stehenden Mikrowellenfeldes und damit auch die Amplitude der über die Antenne 6 abgeleiteten Mikrowellenschwingung ist abhängig von der Lage der Frequenz des Mikrowellenfeldes relativ zu der Resonanzfrequenz der Resonatoranordnung 1 und von der Bandbreite der Resonatoranordnung 1. Diese Größen sind in der Beschreibung zur Fig. 2 näher erläutert. Beide Größen werden durch die Wechselwirkung zwischen dem Zigarettenstrang 12 und dem Mikrowellenfeld beeinflusst. Daher sind die Amplituden der sich in der Resonatoranordnung 1 ausbildenden stehenden Mikrowellenfelder bei den nacheinander zugeführten Frequenzen f1 und f2 unterschiedlich und werden durch den Zigarettenstrang 12 auch unterschiedlich beeinflusst, so dass die beiden Amplituden bzw. deren durch die Auswerteschaltung 11 bestimmten Mittelwert 26 und Differenz 27 Aussagen sowohl über das Vorhandensein von Fremdkörpern 34 im Zigarettenstrang 12, als auch über die Tabakdichte 30 und die Tabakfeuchte 29 des im Zigarettenstrang 12 enthaltenen Tabaks 12b ermöglichen.

Die in Fig. 2 dargestellten Resonanzkurven 51 bis 54 ergeben sich, wenn einer Resonatoranordnung, wie sie oben beschrieben ist, Mikrowellen unterschiedlicher Frequenzen f bei gleicher Leistung zugeführt werden und die aus dem Resonator ausgekoppelte Transmissionsleistung U gegen die Frequenz f aufgetragen wird. Bei leerem Resonator ergibt sich eine Resonanzkurve 51, welche allein durch die Eigenschaften des Resonators bestimmt ist. Bei Befüllungen unterschiedlicher Art, z. B. mit Tabak unterschiedlicher Dichte und Feuchte, ergeben sich abweichende Kurven 52, 53 oder 54, welche neben den Resonatoreigenschaften auch durch die Materialeigenschaften des Füllgutes bestimmt sind. Die Resonanzkurven 51 bis 54 lassen sich eindeutig durch zwei Kenngrößen beschreiben, nämlich durch ihre Resonanzfrequenz, bei Kurve 52 als 55 eingezeichnet, bei welcher die maximale Transmissionsleistung U gemessen wird, und durch ihre Bandbreite, das ist der Abstand der Frequenzen beiderseitig des Maximums, bei welchen die Transmissionsleistung U auf das 0,7-fache des Maximums abgesunken ist, für Kurve 52 eingezeichnet als 56. Um diese beiden charakteristischen Größen zu messen, werden gewöhnlich der Resonatoranordnung nacheinander Mikrowellen konstanter Leistung bei z. B. hundert unterschiedlichen Frequenzen f zugeführt, die Transmissionsleistung U bei diesen Frequenzen f ermittelt und aus diesen Daten nach einem mathematischen Verfahren die beiden Größen bestimmt. Aus den Istwerten der beiden Größen oder der Änderungen der beiden Größen gegenüber der leeren Resonatoranordnung wird im Stand der Technik dann die Materialdichte und die Materialfeuchte berechnet. In dem Verfahren gemäß der Erfindung werden die Istwerte dieser Größen benutzt, um auf das Vorhandensein oder das Fehlen von Fremdmaterialien in einer Materialmenge zu schließen.

Ein schnelleres Verfahren zur Bestimmung von charakteristischen Größen der Resonanzkurven gemäß Fig. 2, wie es z. B. durch die Vorrichtung gemäß Fig. 1 durchgeführt wird, zeigen die Figuren 3,4 und 5. Einer Resonatoranordnung werden, wie in Fig. 3 ersichtlich, wechselweise mit konstanter Leistung Mikrowellen der Frequenzen f1 und f2 in schneller Abfolge zugeführt, welche symmetrisch um die Mittenfrequenz fm angeordnet sind und sich um den Frequenzabstand Δf unterscheiden. In Fig. 4 sind zwei Resonanzkurven U1 und U2 für die leere bzw. mit Messgut gefüllte Resonatoranordnung dargestellt, welche sich in Resonanzfrequenz und Bandbreite unterscheiden. Die Resonanzkurven U1 und U2 sind nur der Verständlichkeit halber eingezeichnet und werden in dem beschriebenen Verfahren nicht vollständig ermittelt. Am Ausgang der Resonatoranordnung wird jetzt, wie aus Fig. 5 ersichtlich, in schneller Abfolge die Transmissionsleistung bei den Frequenzen f1 und f2 gemessen, für die Resonanzkurve U1 die Werte U1(f1) und U1(f2), für die Resonanzkurve U2 die Werte U2(f1) und U2(f2). Verglichen mit der Bandbreite der Resonanzkurven U1 und U2 ist der Abstand Δf der Frequenzen f1 und f2 sehr klein, die Proportionen in der Darstellung dienen der Übersichtlichkeit. Daher entspricht der Mittelwert der gemessenen Transmissionen der Flankenhöhe der Resonanzkurven bei der Mittenfrequenz fm, während die Differenz der Transmissionen der Flankensteilheit der Resonanzkurven bei der Mittenfrequenz fm entspricht. Mit Flankenhöhe und Flankensteilheit der Resonanzkurven liegen zwei charakteristische Größen derselben vor. Die Istwerte dieser Größen werden im Stand der Technik zur Bestimmung der Materialdichte und der Materialfeuchte des Messgutes als Ausgangswerte verwendet, in dem Verfahren gemäß der Erfindung wird anhand der Istwerte dieser Größen auf das Vorhandensein oder das Fehlen von Fremdmaterial in dem Produktionsmaterial, z. B. Schnitttabak, geschlossen.

Anstelle der in Figuren 3 und 5 dargestellten digitalen Umschaltung der Eingangsfrequenzen f1,f2 kann auch eine z. B. sinusförmige Frequenzmodulation verwendet werden, ohne das Verfahren wesentlich zu verändern.

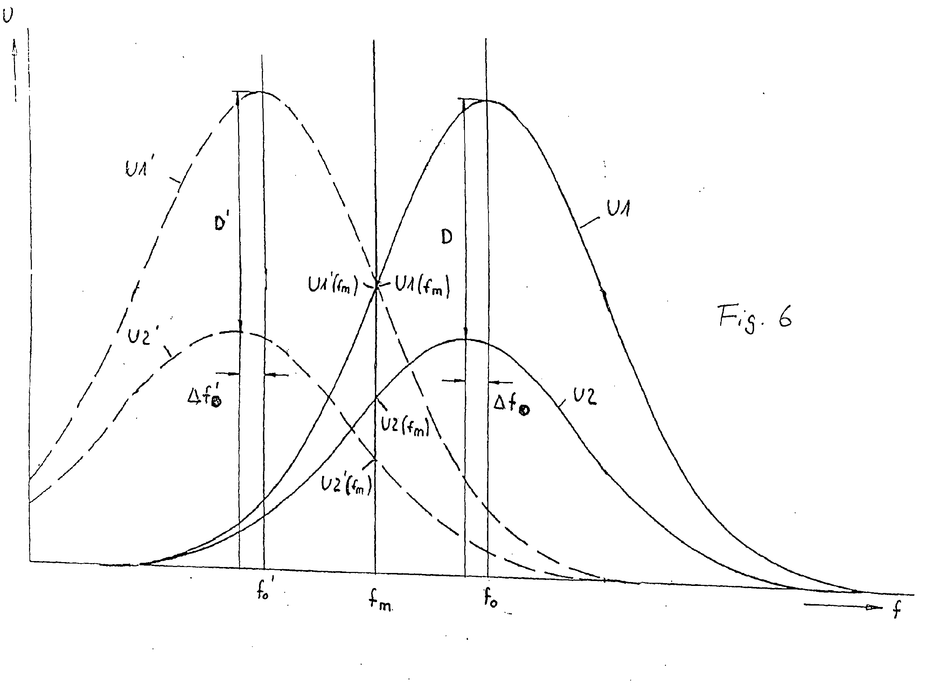

In der in Fig. 6 dargestellten Methode zur Bestimmung zweier charakteristischer Größen eines Mikrowellenfeldes werden zwei Resonatoranordnungen verwendet, welche nacheinander durch das Messgut beeinflusst werden. Ein entsprechendes Verfahren ist z. B. aus der DE 196 25 944 A1 der Anmelderin bekannt. Die Resonatoranordnungen weisen unbelegt die Resonanzkurven U1 bzw. U1' auf, deren Resonanzfrequenzen fo bzw. fo' sind gegeneinander verschoben. Beiden Resonatoranordnungen werden Mikrowellen gleicher Leistung mit der Frequenz fm zugeführt, welche in der Mitte der Frequenzen fo und fo' liegt. Durch den im wesentlichen symmetrischen Verlauf der Resonanzkurven bezüglich ihrer Resonanzfrequenzen fo bzw. fo' sind die hinter den unbelegten Resonatoranordnungen gemessenen Transmissionsleistungen U1(fm) und U1'(fm) gleich. Bei Einwirkung eines Messgutes auf die Resonatoranordnungen ergeben sich die Resonanzkurven U2 bzw. U2', welche gegenüber den Kurven U1 bzw. U1' um die Faktoren D bzw. D' bedämpft und um die Beträge Δfo bzw. Δfo' frequenzverschoben sind. Die im belegten Zustand ermittelten Transmissionen U2(fm) und U2'(fm) sind nicht mehr gleich und gegenüber den Transmissionen U1(fm) und U1'(fm) verringert. Der sich ergebende Mittelwert der Transmissionen und die Differenz zwischen denselben stellen wiederum zwei charakteristische Größen des Mikrowellenfeldes dar, deren Istwerte nach dem Stand der Technik dazu verwendet werden, die Materialdichte und/oder die Materialfeuchte eines Messgutes zu ermitteln. In dem Verfahren gemäß der Erfindung werden die Istwerte dieser Größen verwendet, um das Vorhandensein oder das Fehlen von Fremdkörpern in einem Produktionsmaterial, z. B. Tabak, nachzuweisen. Das beschriebene Messverfahren kann leicht dahingehend modifiziert werden, dass der Abstand der Resonanzfrequenzen fo,fo' der beiden Resonatoranordnungen wesentlich größer als hier dargestellt ist und dass anstelle einer Messfrequenz fm für jeden Resonator eine andere Frequenz verwendet wird, welche in der Nähe der Resonanzfrequenz fo,fo' der entsprechenden Resonatoranordnung liegt. In der Darstellung ist nicht der Tatsache Rechnung getragen, dass das Messgut zeitlich versetzt mit beiden Resonatoranordnungen wechselwirkt, es werden die Verhältnisse gezeigt, welche auftreten, wenn beide Resonatoranordnungen durch einen identischen Abschnitt des Messgutes beeinflusst werden, was der tatsächlichen Anwendung des Verfahrens entspricht. In einer das Verfahren realisierenden Vorrichtung wird dies erreicht, indem die Messsignale von der Resonatoranordnung, welche zuerst mit dem Messgut wechselwirkt, elektronisch verzögert werden.

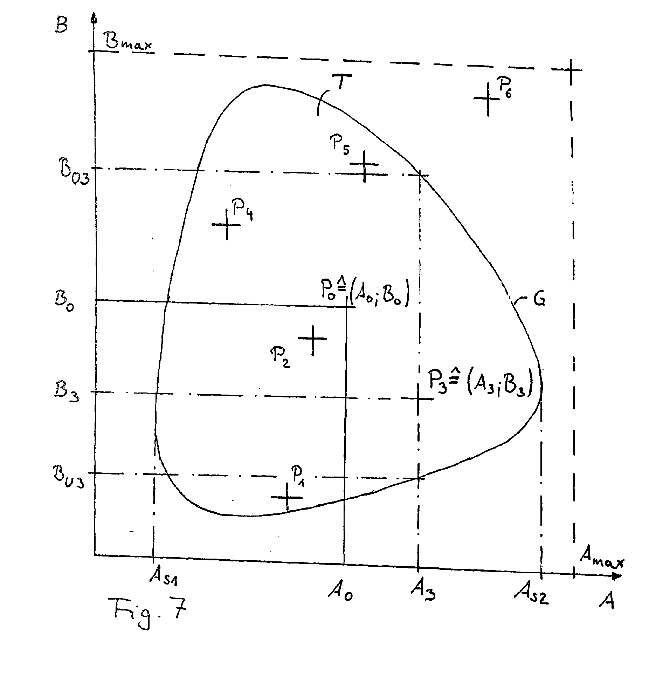

In Figur 7 ist eine theoretische Ebene dargestellt, welche durch die möglichen Werte A und B der charakteristischen Größen des Mikrowellenfeldes aufgespannt wird. Jedes Wertepaar (A;B), welches z. B. nach einem der oben genannten Verfahren ermittelt wird, bildet einen Punkt in dieser Ebene. Bei der Inbetriebnahme einer das erfindungsgemäße Verfahren anwendenden Vorrichtung wird zunächst ein sogenannter Lernprozess gestartet, bei welchem eine Referenzmaterialmenge, welche frei von Fremdmaterialien ist, durch die Vorrichtung geführt wird. Bei Einsatz des Verfahrens an einer Zigarettenherstellungsmaschine, z. B. vom Typ PROTOS 90 der Anmelderin, wird beispielsweise ein Zigarettenstrang eine Minute lang durch die Vorrichtung gefördert, bei einer Stranggeschwindigkeit von etwa 10 m/s. Da in den oben beschriebenen Verfahren in der Regel ein Wertepaar der charakteristischen Größen pro mm Strangvorschub aufgenommen wird, werden während des Lernprozesses etwa 600000 Wertepaare aufgezeichnet, welche in Fig. 7 der Übersichtlichkeit halber bis auf die den exemplarisch eingetragenen Punkten $P_1$ bis $P_5$ entsprechenden Wertepaaren (A1;B1) bis (A5;B5) nicht dargestellt sind. Die jeweiligen Mittelwerte der beiden Größen, gekennzeichnet mit Ao bzw. Bo, werden berechnet, der dem Wertepaar (Ao;Bo) entsprechende Punkt Po bildet das Zentrum eines Wertebereiches T, in welchem die im beschriebenen Lernprozess aufgenommenen Wertepaare liegen. Die dargestellte Ebene ist durch die möglichen Maximalwerte $A_{max}, B_{max}$ der beiden Größen begrenzt.

Die während des Lernprozesses ermittelten Wertepaare der beiden Größen definieren den zulässigen Wertebereich T. Um dieses Gebiet wird eine geschlossene Grenzlinie G gezogen, welche im wesentlichen alle ermittelten Wertepaare umschließt. Diese Grenzlinie kann im einfachsten Fall ein Kreis um das Zentrum Po des Bereiches T sein, dessen Radius so gewählt ist, dass gerade eben alle Punkte in dessen Inneren liegen.

Die Festlegung einer besser angepassten Grenzkurve G kann z. B. durch ein im folgenden beschriebenes mathematisches Verfahren erfolgen. Über eine mathematische Funktion S(A,B) wird jedem Wertepaar (A;B) eine Zahl S zugeordnet. Eine geeignete Funktion ist z. B.

$$S = S(A,B) = \sum_{i,j} a_{i,j} \cdot (A - A_0)^i \cdot (B - B_0)^j$$

Dabei sind $a_{i,j}$ Parameter, durch welche sich die Funktion an die Kontur des Bereiches T anpassen lässt. Um diese Anpassung durchzuführen, wird zuerst die Summe QS der quadrierten Funktionswerte $S^2$ für alle Wertepaare (A; B) gebildet

$$QS = \sum S^2(A,B)$$

und durch Variation der Parameter $a_{i,j}$ so optimiert, dass die Summe QS ein Minimum erreicht. In einem nächsten Schritt wird ein Grenzwert $S_G$ für die Funktion S definiert, welcher so gewählt wird, dass die Funktion S(A,B) für alle im Lernprozess ermittelten Wertepaare (A;B) einen Wert kleiner als $S_G$ ergibt. Die Grenzkurve G ist dann die Menge aller Punkte $P_G$, für deren entsprechende Wertepaare $(A_G;B_G)$ gilt:

$$S(A_G, B_G) = S_G$$

Die in Fig.7 dargestellte Grenzkurve G ergibt sich z. B. bei einem Grenzwert $S_G = 5$ mit den Parametern

$$a_{i,j} = \begin{pmatrix} 0 & 0 & 0{,}5 \\ 0 & 0{,}3 & 0{,}2 \\ 0{,}5 & 0{,}2 & 0{,}04 \end{pmatrix}$$

Um z. B. für einen durch die Werte $A_3$ und $B_3$ festgelegten Punkt $P_3$ zu überprüfen, ob er innerhalb des zulässigen Wertebereichs T liegt, kann wie folgt vorgegangen werden.

Zunächst werden der kleinste Wert $A_{S1}$ und der größte Wert $A_{S2}$ innerhalb des Wertebereiches T bestimmt und als Grenzwerte für den Wert $A_3$ verwendet. Wenn der zu prüfende Wert $A_3$, wie dargestellt, zwischen diesen beiden Grenzwerten liegt, so kann der Punkt $P_3$ innerhalb des Wertebereiches T liegen. Ansonsten könnte dies ausgeschlossen werden und das Signal würde erzeugt. Danach werden der kleinste Wert $B_{U3}$ und der größte Wert $B_{O3}$ ermittelt, welche auf Höhe des Wertes $A_3$ innerhalb des Bereiches T liegen, und als Grenzwerte für den Wert $B_3$ verwendet. Liegt der zu prüfende Wert $B_3$, wie dargestellt, zwischen diesen Grenzwerten, so liegt auch der Punkt $P_3$ innerhalb des Bereiches

T, ansonsten würde das Signal erzeugt.

Der zusätzlich dargestellte Punkt $P_6$ liegt deutlich außerhalb des Bereiches T.

Das Auftreten entsprechender Werte der beiden Größen wird daher dazu führen, dass das Signal erzeugt wird.

Die vorangegangenen Ausführungen dienen nur der Erläuterung der Erfindung. Das erfindungsgemäße Verfahren ist auch in Verbindung mit anderen Messverfahren anwendbar, in welchen Eigenschaften eines Materials mittels Mikrowellen bestimmt werden. Dabei können die charakteristischen Größen des Mikrowellenfeldes, welche ermittelt werden, z. B. auch die Phasendrehung eines Mikrowellenfeldes bei Durchgang durch eine Resonatoranordnung oder bei Durchstrahlung des Messgutes durch ein gerichtetes Strahlungsfeld sein, ebenso können Phasen und Amplituden von an Resonatoranordnungen oder durchstrahltem Messgut reflektierten Mikrowellen bestimmt werden.

**Patentansprüche**

1. Verfahren zum Prüfen einer Materialmenge, welche hauptsächlich ein Produktionsmaterial der Tabak verarbeitenden Industrie, insbesondere Tabak oder Filtertow, enthält, auf das Vorhandensein eines Fremdmaterials in dieser Menge, bei welchem ein Mikrowellenfeld erzeugt wird, die Materialmenge in den Wirkbereich des Mikrowellenfeldes eingebracht wird und die Beeinflussung des Mikrowellenfeldes analysiert wird, indem die Istwerte einer ersten und einer zweiten charakteristischen Größe des Mikrowellenfeldes gleichzeitig gemessen werden, **dadurch gekennzeichnet, dass** ein zulässiger Wertebereich für diese Istwerte vorgegeben wird, dass geprüft wird, ob die Istwerte in dem zulässigen Wertebereich liegen und dass ein Signal erzeugt wird, wenn die Istwerte nicht in dem zulässigen Wertebereich liegen.

2. Verfahren nach Anspruch 1, **dadurch gekennzeichnet, dass** der zulässige Wertebereich die Werte der beiden Größen umfasst, welche bei Beeinflussung des Mikrowellenfeldes durch eine Materialmenge auftreten, die ausschließlich das Produktionsmaterial enthält.

3. Verfahren nach Anspruch 1 oder 2, **dadurch gekennzeichnet, dass** das genannte Signal das Vorhandensein von Fremdmaterial in der Materialmenge anzeigt.

4. Verfahren nach einem der Ansprüche 1 bis 3, **dadurch gekennzeichnet, dass** die Materialmenge durch einem Materialstrom gebildet wird, welcher durch den Wirkbereich bewegt wird.

5. Verfahren nach Anspruch 5, **dadurch gekennzeichnet, dass** der Materialstrom durch ein Hüllmaterial umschlossen wird.

6. Verfahren nach einem der Ansprüche 4 oder 5, **dadurch gekennzeichnet, dass** der Materialstrom vor oder nach dem Durchtritt durch den Wirkbereich in Abschnitte unterteilt wird und dass Abschnitte, bei deren Durchtritt das Signal erzeugt wird, nachfolgend aus dem Materialstrom ausgesondert werden.

7. Verfahren nach Anspruch 6, **dadurch gekennzeichnet, dass** das Produktionsmaterial vor dem Durchtritt durch den Wirkbereich zu einem endlosen Strang geformt wird, dass dieser Strang mit einem Hüllstreifen umwickelt wird, dass dieser umhüllte Strang vor oder nach dem Durchtritt durch den Wirkbereich in längliche Abschnitte unterteilt wird, welche zu Zigaretten weiterverarbeitet werden und dass Abschnitte, während deren Durchtritt durch den Wirkbereich das Signal erzeugt wird, vor der Weiterverarbeitung ausgesondert werden.

8. Verfahren nach einem der Ansprüche 4 bis 7, **dadurch gekennzeichnet, dass** der zulässige Wertebereich ermittelt wird, indem eine Referenzmenge, welche ausschließlich das Produktionsmaterial enthält, durch den Wirkbereich bewegt wird und dass die Istwerte, welche während des Durchtritts der Referenzmenge gemessen werden, den zulässigen Wertebereich bilden.

9. Verfahren nach Anspruch 8, **dadurch gekennzeichnet, dass** die Referenz-menge von einem Hüllmaterial umschlossen wird.

10. Verfahren nach einem der vorangehenden Ansprüche, **dadurch gekennzeichnet, dass** das Verfahren ausgeführt wird, während gleichzeitig unabhängig hierzu aus den Istwerten der selben charakteristischen Größen des Mikrowellenfeldes mindestens eine Eigenschaft des Produktionsmaterials ermittelt wird.

11. Verfahren nach Anspruch 10, **dadurch gekennzeichnet, dass** als Produktionsmaterial Tabak verwendet wird und als Eigenschaft die Dichte und/oder die Feuchte des Tabaks ermittelt wird.

**Claims**

1. Method for testing a material quantity which contains principally a production material of the tobacco-processing industry, in particular tobacco or filter tow, for the presence of a foreign material in this quantity, in which a microwave field is generated, the material quantity is introduced into the effective range of the microwave field and the influence of the microwave field is analysed, by measuring the actual values of a first and a second characteristic size of the microwave field simultaneously, **characterised in that** a permissible range of values is specified for these actual values, that it is tested whether the actual values are in the permissible range of values and that a signal is generated if the actual values are not in the permissible value range.

2. Method according to claim 1, **characterised in that** the permissible range of values comprises the values of the two sizes which occur when the microwave field is influenced by a material quantity which contains only the production material.

3. Method according to claim 1 or 2, **characterised in that** the named signal indicates the presence of foreign material in the material quantity.

4. Method according to one of claims 1 to 3, **characterised in that** the material quantity is formed by a material flow which is moved through the effective range.

5. Method according to claim 5, **characterised in that** the material flow is enclosed by an encapsulating material.

6. Method according to one of claims 4 or 5, **characterised in that** the material flow is sub-divided into sections before or after passing through the effective range and that sections on the passage of which the signal is generated, are subsequently segregated from the material flow.

7. Method according to claim 6, **characterised in that** the production material is shaped to a continuous strand before passage through the effective range, that this strand is wrapped with an encapsulating strip, that this encapsulated strand is sub-divided into oblong sections, which are further processed to cigarettes, before or after passing through the effective range and that sections on the passage through the effective range of which the signal is generated, are segregated before further processing.

8. Method according to one of claims 4 to 7, **characterised in that** the permissible range of values is determined by a reference quantity, which contains only the production material, being moved through the effective range and the actual values which are measured during passage through the reference quantity form the permissible value range.

9. Method according to claim 8, **characterised in that** the reference quantity is enclosed by an encapsulating material.

10. Method according to one of the preceding claims, **characterised in that** the method is carried out whilst simultaneously, independently of this, at least one property of the production material is determined from the actual values of the same characteristic sizes of the microwave field.

11. Method according to claim 10, **characterised in that** tobacco is used as the production material and the density and/or moisture of the tobacco is determined as the property.

**Revendications**

1. Procédé pour tester une quantité de matériau contenant essentiellement un matériau de production de l'industrie de transformation du tabac, en particulier du tabac ou une mèche filtrante, afin de détecter la présence d'une matière étrangère dans cette quantité, procédé dans lequel un champ de micro-ondes est généré, la quantité de matériau est introduite dans la zone d'action du champ de micro-ondes et l'influence du champ de micro-ondes est analysée en mesurant simultanément les valeurs réelles d'une première et d'une deuxième grandeur caractéristique du champ de micro-ondes, **caractérisé en ce qu'**une plage de valeurs admissibles pour ces valeurs réelles est prédéterminée, **en ce qu'**il est vérifié si les valeurs réelles se situent dans la plage de valeurs admissibles et **en ce qu'**un signal est généré lorsque les valeurs réelles ne se situent pas dans la plage de valeurs admissibles.

2. Procédé selon la revendication 1, **caractérisé en ce que** la plage de valeurs admissibles comprend les valeurs des deux grandeurs produites lorsque le champ de micro-ondes réagit à une quantité de matériau contenant exclusivement le matériau de production.

3. Procédé selon la revendication 1 ou 2, **caractérisé en ce que** ledit signal indique la présence de matière étrangère dans la quantité de matériau.

4. Procédé selon l'une des revendications 1 à 3, **caractérisé en ce que** la quantité de matériau est formée par un flux de matériau qui est déplacé à travers la zone d'action.

5. Procédé selon la revendication 4, **caractérisé en ce que** le flux de matériau est entouré d'un matériau de gainage.

6. Procédé selon l'une des revendications 4 ou 5, **caractérisé en ce que** le flux de matériau est divisé en segments avant ou après le passage à travers la zone d'action et **en ce que** les segments dont le passage génère le signal sont ensuite séparés du flux de matériau.

7. Procédé selon la revendication 6, **caractérisé en ce que** le matériau de production est formé, avant son passage à travers la zone d'action, en un boudin sans fin, **en ce que** ce boudin est enveloppé d'une bande de gainage, **en ce que** ce boudin gainé est divisé, avant ou après le passage à travers la zone d'action, en segments oblongs qui sont transformés ultérieurement en cigarettes, et **en ce que** les segments dont le passage à travers la zone d'action a généré le signal, sont séparés avant leur transformation ultérieure.

8. Procédé selon l'une des revendications 4 à 7, **caractérisé en ce que** la plage de valeurs admissibles est déterminée en déplaçant une quantité de référence, laquelle contient exclusivement le matériau de production, à travers la zone d'action et **en ce que** les valeurs réelles mesurées pendant le passage de la quantité de référence forment la plage de valeurs de référence.

9. Procédé selon la revendication 8, **caractérisé en ce que** la quantité de référence est entourée d'un matériau de gainage.

10. Procédé selon l'une des revendications précédentes, **caractérisé en ce que** le procédé est exécuté pendant que, simultanément et indépendamment de ceci, on détermine au moins une caractéristique du matériau de production à partir des valeurs réelles des mêmes grandeurs caractéristiques du champ de micro-ondes.

11. Procédé selon la revendication 10, **caractérisé en ce que** le matériau de production utilisé est du tabac et la caractéristique déterminée est la densité et/ou l'humidité du tabac.

Fig.1

EP 1 221 608 B1

Fig. 2

11

Fig. 4

Fig. 5

Fig. 3

Fig. 6

Fig. 7

$B_{max}$, $B$, $T$, $P_6$, $P_5$, $B_{03}$, $P_4$, $B_0$, $P_0 \stackrel{\wedge}{=} (A_0; B_0)$, $G$, $P_2$, $B_3$, $P_3 \stackrel{\wedge}{=} (A_3; B_3)$, $B_{U3}$, $P_1$, $A_{S1}$, $A_0$, $A_3$, $A_{S2}$, $A_{max}$, $A$

EP 1 221 608 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4707652 A
- WO 0009983 A
- US 6163158 A
- WO 0120311 A1

- DE 19705260 A1
- DE 19806125 A1
- DE 19854550 A1
- DE 19625944 A1